# EUROPEAN PATENT SPECIFICATION

(11) **EP 2 908 141 B1**
(45) Date of publication and mention of the grant of the patent: **15.03.2017**
(21) Application number: 13845916.9
(22) Date of filing: 27.09.2013
(51) Int. Cl.: G01P 15/18, G01P 15/08, G01P 15/125, H01L 29/84

(54) **ACCELERATION SENSOR**
BESCHLEUNIGUNGSMESSER
CAPTEUR D'ACCÉLÉRATION

(30) Priority: 12.10.2012 JP 2012226509; 06.06.2013 JP 2013119688
(43) Date of publication of application: 19.08.2015
(73) Proprietor: Panasonic Intellectual Property Management Co., Ltd., Osaka-shi, Osaka 540-6207 (JP)
(72) Inventor: KISHIMOTO, Shinichi, Osaka 540-6207 (JP); UEDA, Hideki, Osaka 540-6207 (JP); TAURA, Takumi, Osaka 540-6207 (JP); YOSHIDA, Hitoshi, Osaka 540-6207 (JP); MORI, Takeshi, Osaka 540-6207 (JP); IBARA, Nobuyuki, Osaka 540-6207 (JP); GODA, Kazuo, Osaka 540-6207 (JP)
(74) Representative: Appelt, Christian W.
(86) International application number: PCT/JP2013/005759
(87) International publication number: WO 2014/057623

(56) References cited:
- WO-A1-2009/090841
- WO-A1-2009/090841
- WO-A1-2010/032818
- WO-A1-2010/032818
- JP-A- H1 151 967
- JP-A- H09 113 534
- JP-A- 2004 361 115
- JP-A- 2010 066 231
- US-A- 4 969 359
- US-A1- 2011 049 648

## Description

### [Technical Field]

The present invention relates to an acceleration sensor.

### [Background Art]

Heretofore, an acceleration sensor has been known, which detects acceleration given from the outside. For example, displacement of a mass body is detected from a change of an electrostatic capacitance between an electrode provided on the mass body and a fixed electrode. A MEMS sensor, which detects accelerations in three directions perpendicular to one another by using a comb teeth-like sensor, has also been known (for example, refer to document WO 2010/032818 A1).
Document US 4,969,359 discloses an accelerometer fabricated from silicon, which is responsive to the three orthogonal components of an applied force. Three rectangular beams are formed each having vertical sidewalls lying in crystalline planes orthogonal to one another. Each of the beams is directly responsive to one of the three orthogonal force components.
Document US 2011/00496648 A1 discloses a MEMS device with stress isolation including a proof of mass, a first immovable element and a second immovable element. The proof mass moves in two directions that are orthogonal to one another and are parallel to a plane of a substrate.

### [Summary of Invention]

According to the MEMS sensor described in document WO 2010/032818 A1, the accelerations in the three directions perpendicular to one another can be detected; however, it is desired to detect the accelerations with higher sensitivity.

In this connection, it is an object of the present invention to obtain an acceleration sensor capable of enhancing detection sensitivity to the accelerations in the three directions perpendicular to one another.

An acceleration sensor according to the present invention includes: an X detection portion that detects acceleration in an X direction as one direction in planer directions by swinging a first movable electrode about a pair of beam portions; a Y detection portion that detects acceleration in a Y direction perpendicular to the X direction, the Y direction being one direction in the planer directions, by swinging a second movable electrode about a pair of beam portions; and a Z detection portion that detects acceleration in a Z direction as a vertical direction by moving a third movable electrode in parallel in the vertical direction, the third movable electrode being held by a pair or more of beam portions, characterized in that the X detection portion, the Y detection portion and the Z detection portion are arranged in one chip.

The acceleration sensor of the present invention is configured such that the X detection portion arranges first fixed electrodes so that the first fixed electrodes can be opposed to one side and the other side of a front surface of the first movable electrode with a straight line that connects the pair of beam portions to each other as a borderline and detects the acceleration in the X direction based on changes of electrostatic capacitances between the first movable electrode and the first fixed electrodes. The Y detection portion arranges second fixed electrodes so that the second fixed electrodes can be opposed to one side and the other side of a front surface of the second movable electrode with a straight line that connects the pair of beam portions to each other as a borderline, and detect the acceleration in the Y direction based on changes of electrostatic capacitances between the second movable electrode and the second fixed electrodes. The Z detection portion arranges third fixed electrodes so that the third fixed electrodes can be opposed to a front surface and a back surface of the third movable electrode, and detects the acceleration in the Z direction based on changes of electrostatic capacitances between the thirdmovable electrode and the third fixed electrodes.

In the acceleration sensor according to the above-described aspects, an acceleration sensor according to a third aspect of the present invention may be configured such that the third fixed electrode arranged on the back surface of the third movable electrode is pulled out to one side of the third movable electrode through a pillar-like fixed electrode separated from the third movable electrode.

In the acceleration sensor according to the above-described aspects, an acceleration sensor according to a fourth aspect of the present invention may be configured such that the X-detection portion, the Y-detection portion and the Z detection portion are arranged in line.

In the acceleration sensor according to the above-described aspect, an acceleration sensor according to a fifth aspect of the present invention may be configured such that the Z detection portion is arranged in the center, and the x detection portion and the Y detection portion are, respectively, arranged on both sides of the Z detection portion.

In the acceleration sensor according to the above-described aspect, an acceleration sensor according to a sixth aspect of the present invention may be configured such that, in a state where a frame portion that incorporates the X detection portion, the Y detection portion and the Z detection portion therein is sandwiched by a first fixing plate and a second fixing plate, joint regions of the beam portions of the Z detection portion in the frame portion among the Z detection portion, the X detection portion and the Y detection portion are separated from the first fixing plate.

In the acceleration sensor according to the above-described aspect an acceleration sensor according to a seventh aspect of the present invention, in the frame portion among the Z detection portion, the X detection portion and the Y detection portion, symmetric regions which become symmetric to the joint regions with respect to the Z detection portion taken as a reference may be separated from the first fixing plate.

In the acceleration sensor according to the above-described aspect, an acceleration sensor according to an eighth aspect of the present invention may be configured such that a frame portion that incorporates the X detection portion, the Y detection portion and the Z detection portion therein are arranged in the one chip, and through portions having a symmetric structure with respect to the third movable electrode taken as a reference may be formed in the frame portion on both sides in a first direction of the third movable electrode.

In the acceleration sensor according to the above-described aspect, an acceleration sensor according to a ninth aspect of the present invention may be configured such that pillar-like fixed electrodes are pulled out through the respective through portions formed on both sides in the first direction.

In the acceleration sensor according to the above-described aspects, an acceleration sensor according to a tenth aspect of the present invention may be configured such that through portions having the symmetric structure with respect to the third movable electrode taken as a reference are also formed in the frame portion on both sides in a second direction perpendicular to the first direction.

In the acceleration sensor according to the above-described aspect, an acceleration sensor according to an eleventh aspect of the present invention may be configured such that the pillar-like fixed electrodes are pulled out through the respective through portions formed on both sides in the second direction.

In the acceleration sensor according to the above-described aspects, an acceleration sensor according to a twelfth aspect of the present invention may be configured such that the X detection portion, the Y detection portion and the Z detection portion are arranged in line with the Z detection portion located at the center, and a direction of the arrangement of the X detection portion, the Y detection portion and the Z detection portion are the first direction.

### [Brief Description of Drawings]

FIG. 1 is a perspective view showing an internal configuration example of a package having an acceleration sensor according to a first embodiment built-in.
FIG. 2 is an exploded perspective view of the acceleration sensor according to the first embodiment.
FIGs. 3(a) and 3(b) are cross-sectional views of the acceleration sensor according to the first embodiment: FIG. 3 (a) is a cross-sectional view of an X detection portion; and FIG. 3(b) is a cross-sectional view of a Z direction.
FIG. 4 is a cross-sectional view of the X detection portion in a state where acceleration in an X direction is not applied in the acceleration sensor according to the first embodiment.
FIG. 5 is a view for explaining a principle of detecting the acceleration in the X direction in the state shown in FIG. 4.
FIG. 6 is a cross-sectional view of the X detection portion in a state where acceleration of 1 G is applied in the X direction in the acceleration sensor according to the first embodiment.
FIG. 7 is a view for explaining a principle of detecting the acceleration in the X direction in the state shown in FIG. 6.
FIG. 8 is a cross-sectional view of a Z detection portion in a state where acceleration of 1 G is applied in a Z direction in the acceleration sensor according to the first embodiment.
FIG. 9 is a view for explaining a principle of detecting the acceleration in the Z direction in the state shown in FIG. 8.
FIG. 10 is an exploded perspective view of an acceleration sensor according to a second embodiment.
FIG. 11 is an exploded perspective view of another acceleration sensor according to the second embodiment.
FIGS. 12 (a) to 12 (f) are views for explaining Z detection portions of an acceleration sensor according to a third embodiment: FIG. 12(a) is the second embodiment; FIG. 12(b) is Example 1; FIG. 12(c) is Example 2; FIG. 12(d) is Example 3; FIG. 12(e) is Example 4; and FIG. 12(f) is Example 5.

### [Description of Embodiment]

A description in detail of embodiments of the present invention is made below while referring to the drawings. Note that, hereinbelow, common reference numerals are assigned to similar constituents, and a duplicate description is omitted.

### (First embodiment)

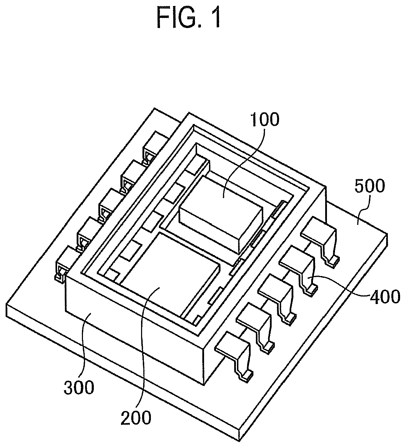

By using FIG. 1 to FIG. 9, a description of a configuration of an acceleration sensor according to a first embodiment is made below.

### [Application example]

FIG. 1 is a perspective view showing an internal configuration example of a package 300 having an acceleration sensor according to the first embodiment built-in. Here is shown a state where a cover of the package 300 packaged on a substrate 500 is opened. As shown in this drawing, on the package 300, there are mounted: a sensor chip 100 that houses the acceleration sensor therein; an ASIC 200 or the like that performs a variety of computational operations based on an output from the sensor chip 100. Terminals 400 are pulled out from the package 300 and are connected to the substrate 500.

### [Configuration of acceleration sensor]

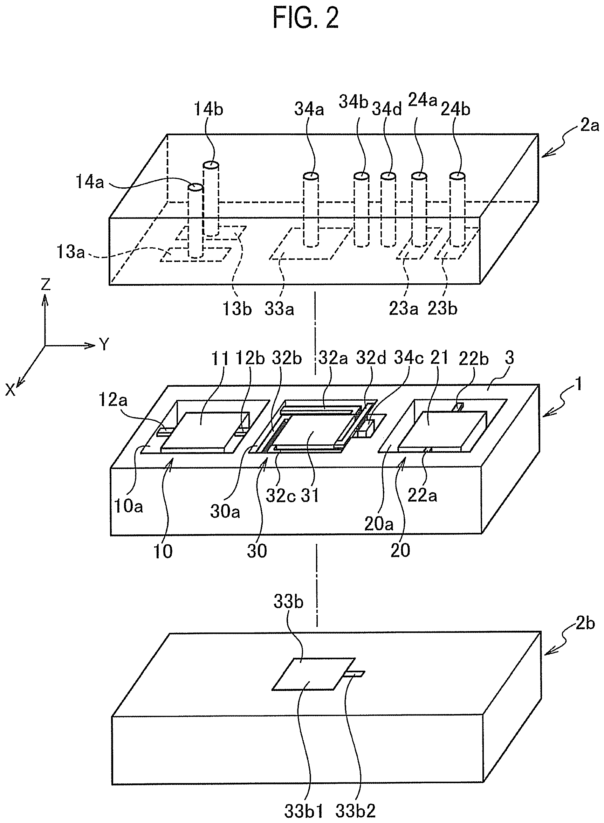

FIG. 2 is an exploded perspective view of the acceleration sensor according to the first embodiment. In this acceleration sensor, a weight each for detecting accelerations in three directions of XYZ axes (XYZ three-axis directions) is formed as individual weights for the respective axes, each of which detects only single-axis acceleration, and the respective weights (respective sensors) in the three-axis directions, which are as described above, are arranged in one chip. Such acceleration in planar directions (XY directions) is detected by having the weight operated like a seesaw about a pair of twist beams, and acceleration in a vertical direction (Z direction) is detected by moving the weight, which is held by one or more pairs of beams, in parallel in the vertical direction.

Specifically, as shown in FIG. 2, the acceleration sensor has a configuration in which upper and lower surfaces of a sensor unit 1 are sandwiched by an upper fixing plate 2a and a lower fixing plate 2b. The sensor unit 1 is formed of a silicon SOI substrate or the like, and the upper fixing plate 2a and the lower fixing plate 2b are formed of an insulator such as glass.

Hereinafter, in the sensor unit 1, a portion for detecting the acceleration in the X direction is referred to as an "X detection portion 10", a portion for detecting the acceleration in the Y direction is referred to as a "Y detection portion 20", and a portion for detecting the acceleration in the Z direction is referred to as a "Z detection portion 30". The X direction is one direction in the planar directions. The Y direction is one direction in the planar directions, which is a direction perpendicular to the X direction. The Z direction is the vertical direction.

The X detection portion 10 detects the acceleration in the X direction by swinging a first movable electrode 11 about a pair of beam portions 12a and 12b. That is to say, first fixed electrodes 13a and 13b are arranged opposite to one side and the other side of a front surface of the first movable electrode 11 with a straight line that connects the pair of beam portions 12a and 12b to each other as a borderline. In such a way, the acceleration in the X direction can be detected based on changes of electrostatic capacitances between the first movable electrode 11 and the first fixed electrodes 13a and 13b.

The Y detection portion 20 detects the acceleration in the Y direction by swinging a second movable electrode 21 about a pair of beam portions 22a and 22b. That is to say, second fixed electrodes 23a and 23b are arranged opposite to one side and the other side of a front surface of the second movable electrode 21, with a straight line that connects the pair of beam portions 22a and 22b to each other as a borderline. In such a way, the acceleration in the Y direction can be detected based on changes of electrostatic capacitances between the second movable electrode 21 and the second fixed electrodes 23a and 23b.

The Z detection portion 30 detects the acceleration in the Z direction by moving a third movable electrode 31, which is held by two pairs of beam portions 32a, 32b, 32c and 32d, in parallel in the vertical direction. That is to say, third fixed electrodes 33a and 33b are arranged opposite to a front surface and a back surface of the third movable electrode 31. In such a way, the acceleration in the Z direction can be detected based on changes of electrostatic capacitances between the third movable electrode 31 and the third fixed electrodes 33a and 33b.

The X detection portion 10 and the Y detection portion 20 are formed into the same shape, in which only orientations are rotated by 90° with respect to each other, and these are arrayed on both sides of the Z detection portion 30, and are arranged in one chip. That is to say, as shown in FIG. 2, in a frame portion 3, three rectangular frames 10a, 20a and 30a are formed to be arrayed in line. The first movable electrode 11 is arranged in the rectangular frame 10a, the second movable electrode 21 is arranged in the rectangular frame 20a, and the third movable electrode 31 is arranged in the rectangular frame 30a. All of the first to third movable electrodes 11, 21 and 31 have a substantially rectangular shape. Gaps with a predetermined size are provided between the first to third movable electrodes 11, 21 and 31 and sidewall portions of the rectangular frames 10a, 20a and 30a.

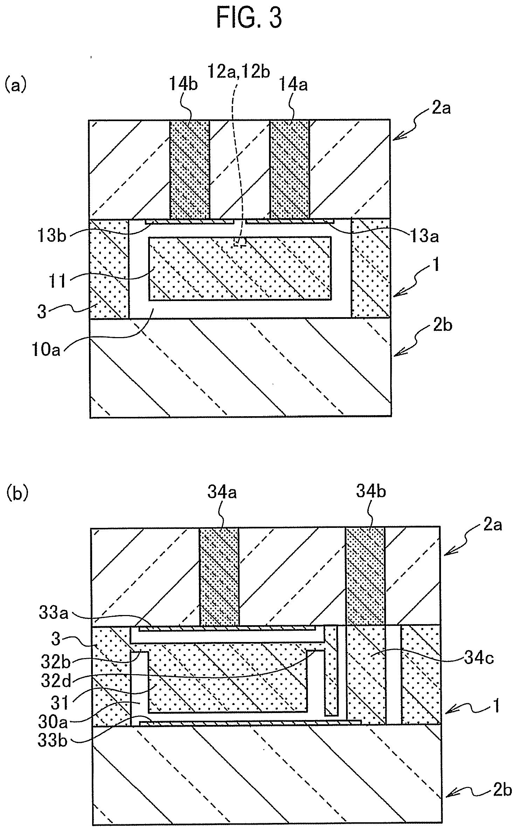

FIGS. 3(a) and 3(b) are cross-sectional views of the acceleration sensor according to the first embodiment: FIG. 3 (a) shows a cross section of the X detection portion 10; FIG. 3(b) shows a cross section of the Z detection section 30. A cross section of the Y detection portion 20 is similar to that of the X detection portion 10, and accordingly, illustration thereof is omitted here.

First, the cross section of the X detection portion 10 is as shown in FIG. 3 (a). That is to say, substantially central portions of opposite two sides of the front surface of the first movable electrode 11 and the sidewall portions of the rectangular frame 10a are coupled to each other by the pair of beam portions 12a and 12b, whereby the first movable electrode 11 is supported so as to be freely swingable with respect to the frame portion 3. On a side of the upper fixing plate 2a, which is opposite to the first movable electrode 11, the first fixed electrodes 13a and 13b are provided the straight line that connects the beam portion 12a and the beam portion 12b to each other as a borderline. The first fixed electrodes 13a and 13b are pulled out to an upper surface (one side) of the upper fixing plate 2a by using first penetration electrodes 14a and 14b. A material of the first penetration electrodes 14a and 14b is a conductor such as silicon, tungsten and copper, and a material of a periphery thereof, which holds the first penetration electrodes 14a and 14b, is an insulator such as glass.

The same also applies to the Y detection portion 20. That is to say, substantially central portions of opposite two sides of the front surface of the second movable electrode 21 and the sidewall portions of the rectangular frame 20a are coupled to each other by the pair of beam portions 22a and 22b, whereby the second movable electrode 21 is supported so as to be freely swingable with respect to the frame portion 3. On the side of the upper fixing plate 2a, which is opposite to the second movable electrode 21, the second fixed electrodes 23a and 23b are provided with the straight line that connects the beam portion 22a and the beam portion 22b to each other as a bordeline. The second fixed electrodes 23a and 23b are pulled out to the upper surface of the upper fixing plate 2a by using second penetration electrodes 24a and 24b. A material of the second penetration electrodes 24a and 24b is a conductor such as silicon, tungsten and copper, and a material of a periphery thereof, which holds the second penetration electrodes 24a and 24b, is an insulator such as glass.

Moreover, the cross section of the Z detection portion 30 is as shown in FIG. 3(b). That is to say, four corners of the third movable electrode 31 and the sidewall portions of the rectangular frame 30a are coupled to each other by the two pairs of L-like beam portions 32a, 32b, 32c and 32d, whereby the third movable electrode 31 is made movable in parallel in the vertical direction. A shape of the beam portions 32a, 32b, 32c and 32d is not particularly limited; however, if the beam portions 32a, 32b, 32c and 32d are formed into such an L shape, then the beam portions 32a, 32b, 32c and 32d can be elongated. On the side of the upper fixing plate 2a, which is opposite to the third movable electrode 31, the third fixed electrode 33a is provided, and on the side of the lower fixing plate 2b, which is opposite to the third movable electrode 31, the fixed electrode 33b is provided. The third fixed electrode 33a is pulled out to the upper surface of the upper fixing plate 2a by using a third penetration electrode 34a. The third fixed electrode 33b includes a protruding region 33b2 that protrudes from a rectangular region 33b1 (refer to FIG. 2). Such a configuration is made, in which the protruding region 33b2 is connected to a pillar-like fixed electrode 34c separated from the third movable electrode 31, and the pillar-like fixed electrode 34c is connected to a third penetration electrode 34b provided in the upper fixing plate 2a. In such a way, the third fixed electrode 33b can be pulled out to the upper surface of the upper fixing plate 2a by using the pillar-like fixed electrode 34c and the third penetration electrode 34b. A material of the third penetration electrodes 34a and 34b is a conductor such as silicon, tungsten and copper, and a material of a periphery thereof, which holds the third penetration electrodes 34a and 34b, is an insulator such as glass.

### [Detection of acceleration in X direction]

An electrostatic capacitance C can be calculated by C = εS/d, where ε is a dielectric constant, S is an opposite area of an electrode, and d is an opposite gap. When the movable electrode rotates by the acceleration, the opposite gap d is changed, and accordingly, the electrostatic capacitance C is changed. Accordingly, differential capacitances (C1-C2, C5-C6) are subjected to CV conversion by the ASIC 200.

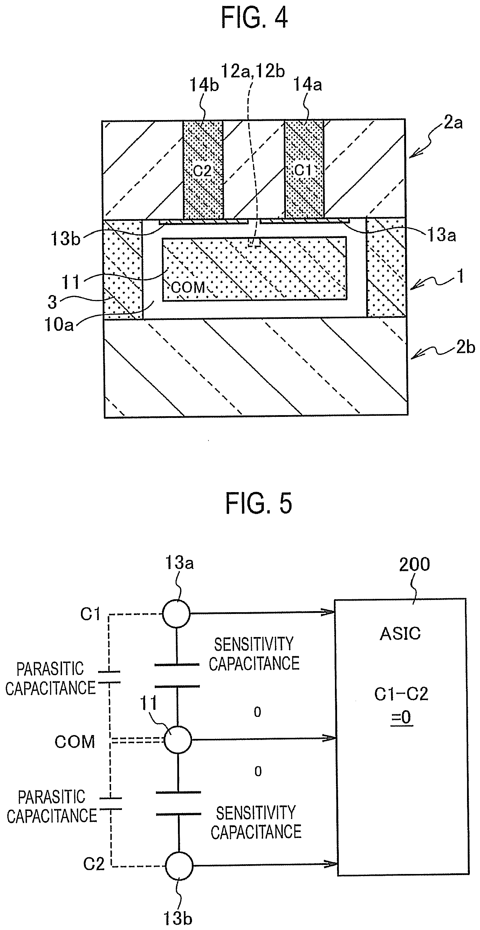

FIG. 4 shows a cross section of the X detection portion 10 in a state where the acceleration in the X direction is not applied. In this case, as shown in FIG. 5, electrostatic capacitances C1 and C2 between the first movable electrode 11 and the first fixed electrodes 13a and 13b become equal to each other. The ASIC 200 calculates a differential value (C1-C2 = 0) between the electrostatic capacitance C1 and the electrostatic capacitance C2, and outputs the calculated differential value as an X output.

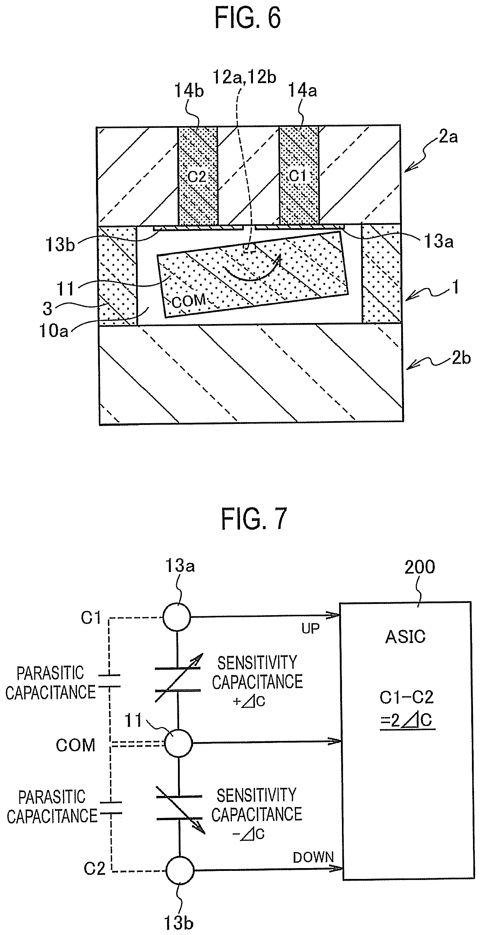

FIG. 6 shows a cross section of the X detection portion 10 in a state where an acceleration of 1G is applied in the X direction. In this case, as shown in FIG. 7, the electrostatic capacitance C1 between the first movable electrode 11 and the first fixed electrode 13a becomes a parasitic capacitance +ΔC, and the electrostatic capacitance C2 between the first movable electrode 11 and the first fixed electrode 13b becomes a parasitic capacitance -ΔC. The ASIC 200 calculates a differential value (C1-C2 = 2ΔC) between the electrostatic capacitance C1 and the electrostatic capacitance C2, and outputs the calculated differential value as an X output.

As described above, the X detection portion 10 detects the acceleration in the X direction based on the changes of the electrostatic capacitances. A principle according to which the Y detection portion 20 detects the acceleration in the Y direction is also similar to the above.

### [Detection of acceleration in Z direction]

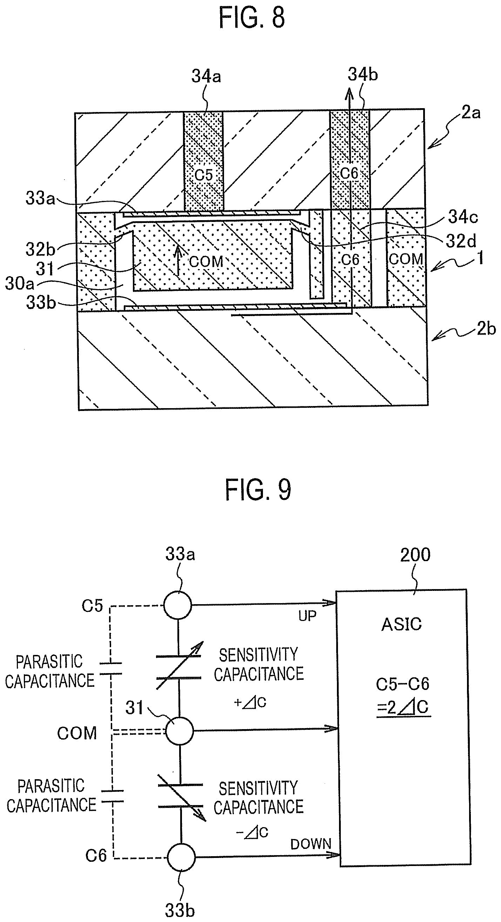

FIG. 8 shows a cross section of the Z detection portion 30 in a state where the acceleration of 1 G is applied in the Z direction. In this case, as shown in FIG. 9, an electrostatic capacitance C5 between the third movable electrode 31 and the third fixed electrode 33a becomes the parasitic capacitance +ΔC, and an electrostatic capacitance C6 between the third movable electrode 31 and the third fixed electrode 33b becomes the parasitic capacitance -ΔC. The ASIC 200 calculates a differential value (C5-C6 = 2ΔC) between the electrostatic capacitance C5 and the electrostatic capacitance C6, and outputs the calculated differential value as a Z output. As described above, the Z detection portion 30 detects the acceleration in the Z direction based on the changes of the electrostatic capacitances.

As described above, in the acceleration sensor according to this embodiment, the X detection portion 10, the Y detection portion 20 and the Z detection portion 30 are arranged in one chip, and accordingly, detection sensitivity to the accelerations in the three directions perpendicular to one another can be enhanced. That is to say, torsion and parallel movement weights are employed, and accordingly, in comparison with the comb teeth-like sensor as described in document WO 2010/032818 A1, heavier weights can be fabricated in the same planar size, 1hus making it possible to obtain high detection sensitivity.

Moreover, in the acceleration sensor according to this embodiment, the respective weights for detecting the accelerations in the XYZ three-axis directions are formed as the individual weights for the respective axes, each of which detects only the single-axis acceleration. Then, the acceleration in the planar directions (XY directions) is detected by operating the weight like a seesaw about the pair of twist beams, and the acceleration in the vertical direction (Z direction) is detected by moving the weight, which is held by the one or more pairs of beams, in parallel in the vertical direction. In three-axis detection by a plurality of the chips, a total size of all of the chips is increased, and moreover, it is necessary to package the plurality of chips. On the other hand, if the respective sensors for the three-axis directions are arranged in one chip, then such peripheral regions of the respective sensors can be shared with one another, and accordingly, it is possible to achieve miniaturization of a chip size and reduction of the number of chips to be packaged.

Moreover, in the acceleration sensor according to this embodiment, the X detection portion 10 arranges the first fixed electrodes 13a and 13b so that the first fixed electrodes 13a and 13b can be opposed to the one side and the other side of the front surface of the first movable electrode 11 with the straight line that connects the pair of beam portions 12a and 12b to each other as a borderline. In such a way, the acceleration in the X direction can be detected based on the changes of the electrostatic capacitance between the first movable electrode 11 and the first fixed electrodes 13a and 13b. Moreover, the Y detection portion 20 arranges the second fixed electrodes 23a and 23b so that the second fixed electrodes 23a and 23b can be opposed to the one side and the other side of the front surface of the second movable electrode 21 with the straight line that connects the pair of beam portions 22a and 22b to each other as a borderline. In such a way, the acceleration in the Y direction can be detected based on the changes of the electrostatic capacitance between the second movable electrode 21 and the second fixed electrodes 23a and 23b. Moreover, the Z detection portion 30 arranges the third fixed electrodes 33a and 33b so that the third fixed electrodes 33a and 33b can be opposed to the front surface and the back surface of the third movable electrode 31. In such a way, the acceleration in the Z direction can be detected based on the changes of the electrostatic capacitance between the third movable electrode 31 and the third fixed electrodes 33a and 33b.

According to such a configuration, the differential capacitance can be detected by two-electrode arrangement, and accordingly, it is possible to cancel the parasitic capacitance. That is to say, in a method that does not detect the differential capacitance, a peripheral parasitic capacitance is added besides the capacitance between the detection electrodes. Therefore, a noise influence of a parasitic capacitance portion occurs, and stability of the output with respect to the acceleration is deteriorated. On the other hand, in the method that detects the differential capacitance, the parasitic capacitance is canceled, and accordingly, the influence of the parasitic capacitance can be reduced. Moreover, it is possible to enhance linearlity by a difference calculation between an increment and decrement of a sensitivity capacitance.

Moreover, in the acceleration sensor according to this embodiment, the third fixed electrode 33b arranged on the back surface of the third movable electrode 31 is pulled out to the upper surface (one side) of the third movable electrode 31 through the pillar-like fixed electrode 34c separated from the third movable electrode 31, thereby facilitating electrical connection thereof at the time of packaging the same. That is to say, in a case of pulling out the third fixed electrode 33b from the lower surface of the third movable electrode 31, dual-sided packaging becomes necessary. On the other hand, if the third fixed electrode 33b is pulled out from the upper surface, then all of the electrodes can be pulled out from the upper surface of the upper fixing plate 2a, thereby facilitating the electrical connection at such packaging time. As a matter of course, there is also an advantage that the miniaturization of the acceleration sensor can be achieved.

Moreover, in the acceleration sensor according to this embodiment, the X detection portion 10, the Y detection portion 20 and the Z detection portion 30 are arranged in line. By such an arrangement as described above, the miniaturization of the acceleration sensor can be achieved.

Furthermore, in the acceleration sensor according to this embodiment, the Z detection portion 30 is arranged in the center, and the X detection portion 10 and the Y detection portion 20 are arranged on both sides thereof, and accordingly, a structure in which a stress state is stable can be fabricated. That is to say, while the X detection portion 10 and the Y detection portion 20 have the same shape, the Z detection portion 30 has a different shape, and accordingly, the stress state becomes unstable depending on a way of arrangement. On the other hand, the X detection portion 10 and the Y detection portion 20 are formed into the same shape, in which only the orientations are rotated by 90° with respect to each other, and by arraying them on both sides of the Z detection portion 30 having the different shape, then the structure in which the stress state is stable can be fabricated.

### (Second embodiment)

Incidentally, the Z detection portion 30 is not formed into a symmetric structure, and accordingly, when the temperature is changed, an asymmetric stress is sometimes generated in a coupled portion thereof to the upper fixing plate 2a made of a different type of material. In such a case, the beam portions 32a, 32b, 32c and 32d are deformed by the asymmetric stress, and there is a possibility that a characteristic change due to the temperature may occur. In this connection, in the second embodiment, the following configuration is employed in order to reduce the characteristic change due to the temperature.

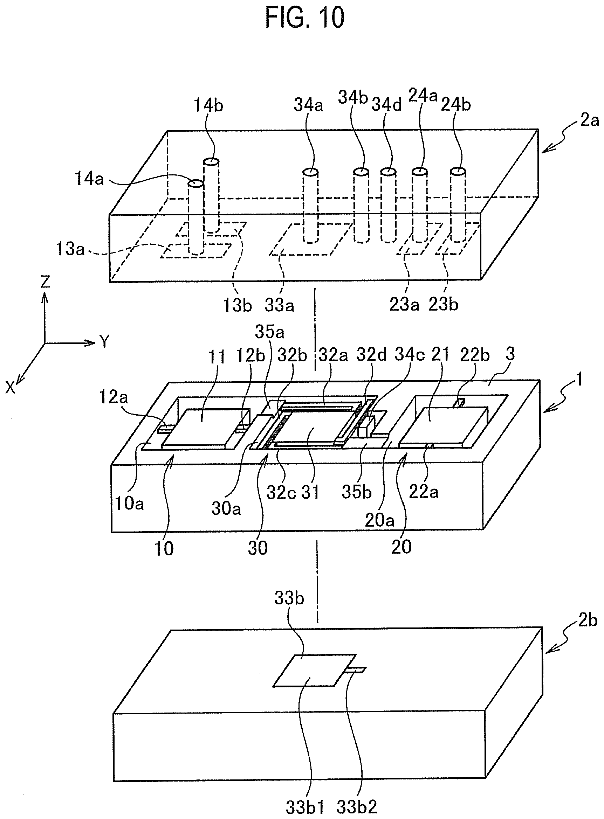

FIG. 10 is an exploded perspective view of an acceleration sensor according to the second embodiment. As shown in this drawing, in the frame portion 3 among the Z detection portion 30, the X detection portion 10 and the Y detection portion 20, joint regions 35a and 35b of the pair of beam portions 32a and 32c of the Z detection portion 30 are made slightly lower than other regions. Therefore, even if the frame portion 3 is sandwiched between the upper fixing plate 2a and the lower fixing plate 2b, the joint regions 35a and 35b are separated from the upper fixing plate 2a. A size of gaps between the joint regions 35a and 35b and the upper fixing plate 2a is not particularly limited; however, it is set at a size by which the joint regions 35a and 35b and the upper fixing plate 2a are not coupled to each other even if the temperature is changed. By such a configuration, the joint regions 35a and 35b and the upper fixing plate 2a are not coupled to each other, and accordingly, an influence of the stress is reduced, and it becomes possible to reduce the characteristic change due to the temperature.

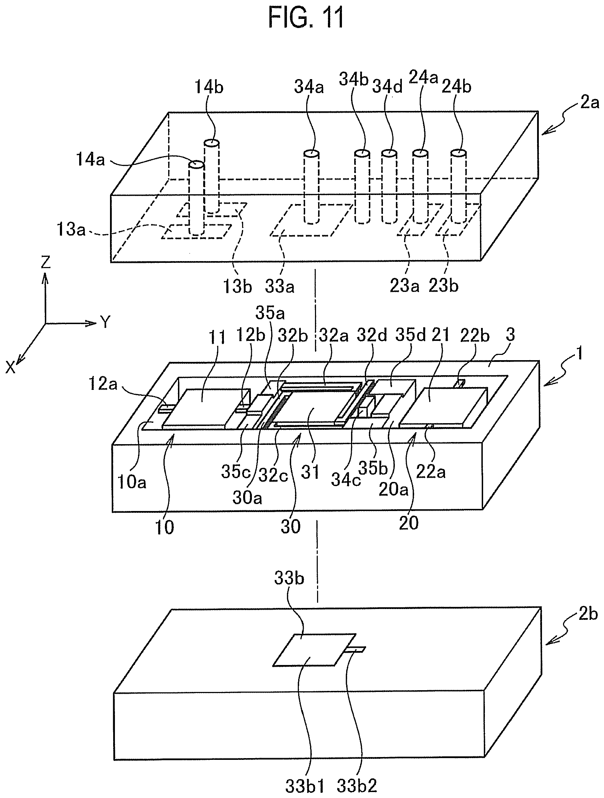

FIG. 11 is an exploded perspective view of another acceleration sensor according to the second embodiment. As shown in this drawing, in the frame portion 3 among the Z detection portion 30, the X detection portion 10 and the Y detection portion 20, symmetric regions 35c and 35d, which become symmetric to the joint regions 35a and 35b with respect to the Z detection portion 30 taken as a reference, may be separated from the upper fixing plate 2a. A shape, area and height of the symmetric region 35c are substantially the same as those of the joint region 35a, and a shape, area and height of the symmetric region 35d are substantially the same as those of the joint region 35b. In such a way, the frame portion 3 on the periphery of the Z detection portion 30 is completely formed into the symmetric structure, and accordingly, an unbalance of the stress generated in a coupled portion thereof to the upper fixing plate 2a can be suppressed, which can further reduce the characteristic change due to the temperature.

As described above, in the acceleration sensor according to this embodiment, in a state where the frame portion 3 is sandwiched by the upper fixing plate 2a and the lower fixing plate 2b, the joint regions 35a and 35b are separated from the upper fixing plate 2a. In such a way, the joint regions 35a and 35b and the upper fixing plate 2a are not coupled to each other, and accordingly, the influence of the stress is reduced, and it becomes possible to reduce the characteristic change due to the temperature. Even if the joint regions 35a and 35b as described above are formed, the Z detection portion 30 is arranged in the center, and the X detection portion 10 and the Y detection portion 20 are arranged on both sides thereof, and accordingly, air tightness in the rectangular frame 30a can be ensured, to realize a configuration in which dust and the like are not mixed into the rectangular frame 30a.

Moreover, in the acceleration sensor in this embodiment, the symmetric regions 35c and 35d, which become symmetric to the joint regions 35a and 35b with respect to the Z detection portion 30 taken as a reference, are separated from the upper fixing plate 2a. In such a way, the frame portion 3 on the periphery of the Z detection portion 30 completely takes the symmetric structure, and accordingly, the unbalance of the stress generated in the coupled portion thereof to the upper fixing plate 2a can be suppressed, which can reduce the characteristic change due to the temperature. Even if such symmetric regions 35c and 35d as described above are formed, the Z detection portion 30 is arranged in the center, and the X detection portion 10 and the Y detection portion 20 are arranged on both sides thereof, and accordingly, the air tightness in the rectangular frame 30a can be ensured, to realize the configuration in which the dust and the like are not mixed into the rectangular frame 30a.

The description of the preferred embodiments of the present invention has been made above; however, the present invention is not limited to the above-described embodiments, and is modifiable in various ways. For example, in the above-described respective embodiments, the configuration is exemplified, in which the four corners of the third movable electrode 31 and the sidewall portions of the rectangular frame 30a are coupled to each other by the two pairs of beam portions 32a, 32b, 32c and 32d; however, two corners of the third movable electrode 31 and the sidewall portions of the rectangular frame 30a may be coupled to each other by the one pair of beam portions 32a and 32c. Moreover, it is also possible to appropriately change specifications (shapes, sizes, layout and the like) of the upper fixing plate 2a, the lower fixing plate 2b, the sensor unit 1 and other details.

### (Third embodiment)

However, even in the second embodiment, when attention is paid to still another region of the periphery of the Z detection portion 30, there is a spot which does not have a symmetric structure. That is to say, in the second embodiment, as shown in FIG. 11, the structure is employed, in which the third fixed electrode 33b is pulled out to the upper surface of the upper fixing plate 2a by using the pillar-like fixed electrode 34c; however, the pillar-like fixed electrode 34c is formed only on the right side of the Z detection portion 30. Therefore, when the temperature is changed, an asymmetric stress is sometimes generated in the coupled portion thereof to the upper fixing plate 2a made of the different type of material. In such a case, the beam portions 32a, 32b, 32c and 32d are deformed by the asymmetric stress, and there is a possibility that the characteristic change due to the temperature may occur. In this connection, in this embodiment, such a peripheral structure of the Z detection portion 30 is changed, whereby the characteristic change due to the temperature is further reduced. Note that, in the following description, a detailed description of similar configurations to those of the second embodiment is omitted.

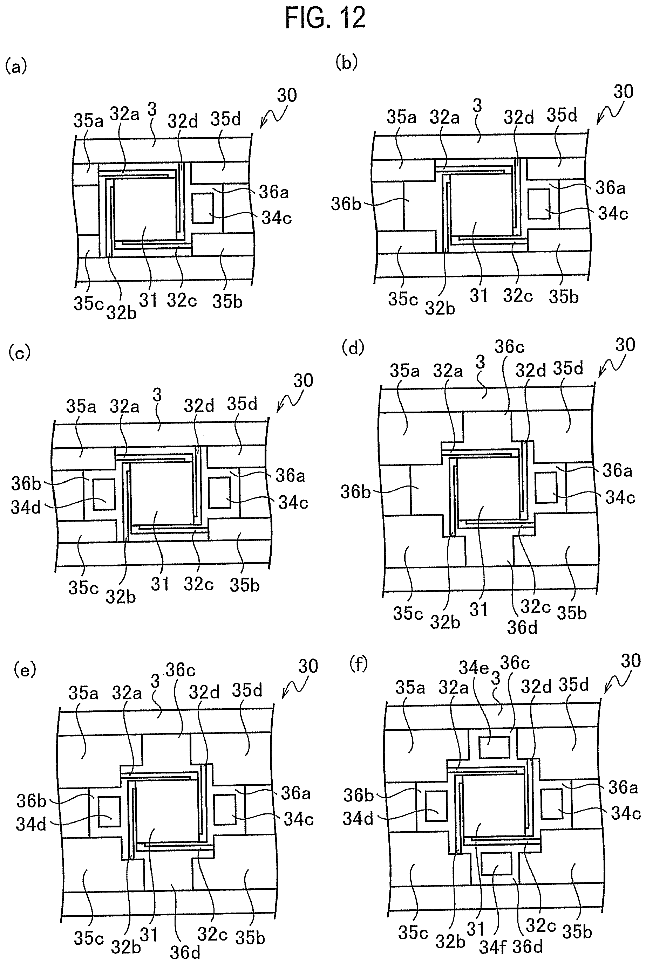

First, FIG. 12 (a) is a top view of the Z detection portion 30 of the acceleration sensor according to the second embodiment. As already described, the four corners of the third movable electrode 31 are coupled to the frame portion 3 by the two pairs of L-like beam portions 32a, 32b, 32c and 32d. A through portion 36a is formed only on the right side of the third movable electrode 31, and the pillar-like fixed electrode 34c is pulled out through this through portion 36a. Therefore, there is a possibility that the characteristic change due to the temperature may occur.

FIG. 12 (b) is a top view of a Z detection portion 30 of an acceleration sensor according to Example 1. As shown in this drawing, in Example 1, through portions 36a and 36b, which have a symmetric structure with respect to the third movable electrode 31 taken as a reference, are formed on the frame portion 3 on both sides in a first direction of the third movable electrode 31. For example, the first direction is an arrangement direction (crosswise direction) in the case where the Z detection portion 30 is located at the center, and the X detection portion 10, the Y detection portion 20 and the Z detection portion 30 are arranged in line. That is to say, on both left and right sides of the Z detection portion 30, the X detection portion 10 and the Y detection portion 20, which have the same shape in which only the orientations are rotated by 90° with respect to each other, are arranged. If such a frame shape of the Z detection portion 30 is also formed into a bilaterally symmetric structure, then the structure in which the stress state is stable is fabricated, which enables to reduce the temperature characteristics.

FIG. 12(c) is a top view of a Z detection portion 30 of an acceleration sensor according to Example 2. As shown in this drawing, in Example 2, pillar-like fixed electrodes 34c and 34d are pulled out through the respective through portions 36a and 36b formed on both right and left sides. Structures of the pillar-like fixed electrodes 34c and 34d are basically the same. However, while a lower end of the pillar-like fixed electrode 34c is connected to the third fixed electrode 33b (refer to FIG. 8),there are no particular limitations to whether or not the pillar-like fixed electrode 34d is connected to the third fixed electrode 33b. That is to say, coupled portions of the pillar-like fixed electrodes 34c and 34d to the upper fixing plate 2a made of the different type of material just need to be symmetric to each other. If not only the through portions 36a and 36b but also the pillar-like fixed electrodes 34c and 34d are formed to have a bilaterally symmetric structure as described above, then a structure with a further stabilized stress state is obtained, which enables to further reduce the temperature characteristics.

FIG. 12(d) is a top view of a Z detection portion 30 of an acceleration sensor according to Example 3. As shown in this drawing, in Example 3, through portions 36c and 36d, which have a symmetric structure with respect to the third movable electrode 31 taken as a reference, are also formed on the frame portion 3 on both sides in a second direction. For example, the second direction is a direction (up and down direction) perpendicular to the first direction. If the frame shape of the Z detection portion 30 is formed into a symmetric structure not only bilaterally but also vertically as described above, then a bilaterally and vertically symmetric weight peripheral structure is realized, and accordingly, a further stabilized structure in stress state is obtained, which enables to further reduce the temperature characteristics.

FIG. 12 (e) is a top view of a Z detection portion 30 of an acceleration sensor according to Example 4. As shown in this drawing, in Example 4, the pillar-like fixed electrodes 34c and 34d are pulled out through the respective through portions 36a and 36b formed on both left and right sides. Moreover, also on both upper and lower sides of the frame portion 3, the through portions 36c and 36d, which have a symmetric structure, are formed. If a pillar structuret is made to have a bilaterally and vertically symmetric structure in the bilaterally and vertically symmetric weight peripheral structure as described above, then a further stabilized structure in stress state is obtained, which enables to further reduce the temperature characteristics.

FIG. 12(f) is a top view of a Z detection portion 30 of an acceleration sensor according to Example 5. As shown in this drawing, in Example 5, the pillar-like fixed electrodes 34c and 34d are pulled out through the respective through portions 36a and 36b formed on both left and right sides. Moreover, the pillar-like fixed electrodes 34e and 34f are pulled out through the respective through portions 36c and 36d formed on both upper and lower side. There are no particular limitations to whether the pillar-like fixed electrodes 34e and 34f are connected to the third fixed electrode 33b, either. If the pillar structure is made to have a bilaterally and vertically symmetric structure in the bilaterally and vertically symmetric weight peripheral structure as described above, then the structure in which the stress state is further stabilized is obtained, which enables to further reduce the temperature characteristics.

As described above, in the acceleration sensor according to this embodiment, the X detection portion 10, the Y detection portion 20, the Z detection portion 30 and the frame portion 3 are arranged in one chip, and the through portions 36a and 36b, which have the symmetric structure with respect to the third movable electrode 31 taken as a reference, are formed on the frame portion 3 on both sides in the first direction (for example, both right and left sides) of the third movable electrode 31. The X detection portion 10 detects the acceleration in the X direction by swinging the first movable electrode 11 about the pair of beam portions 12a and 12b. The Y detection portion 20 detects the acceleration in the Y direction by swinging the second movable electrode 21 about the pair of beam portions 22a and 22b. The Z detection portion 30 detects the acceleration in the Z direction by moving the third movable electrode 31, which is held by the two pairs of beam portions 32a, 32b 32c and 32d, in parallel in the vertical direction. The frame portion 3 incorporates the X detection portion 10, the Y detection portion 20 and the Z detection portion 30 therein. In such a way, the frame shape of the Z detection portion 30 is formed into the bilaterally symmetric structure, and accordingly, the structure stabilized in stress state is obtained, which enables to reduce the temperature characteristics. As a result, the acceleration sensor, which can enhance detection accuracy of the accelerations in the three directions perpendicular to one another, can be provided.

Moreover, in the acceleration sensor according to this embodiment, the pillar-like fixed electrodes 34c and 34d may be pulled out through the respective through portions 36a and 36 formed on both sides in the first direction (for example, both right and left sides). If not only the through portions 36a and 36b but also the pillar-like fixed electrodes 34c and 34d are formed to have the right and left symmetric structure, then the further stabilized structure in the stress state is obtained, which enables to further reduce the temperature characteristics.

Furthermore, in the acceleration sensor according to this embodiment, the through portions 36c and 36d, which have the symmetric structure with respect to the third movable electrode 31 taken as a reference, may also be formed on the frame portion 3 on both sides in a second direction perpendicular to the first direction (for example, both upper and lower sides). If the frame shape of the Z detection portion 30 is formed into the symmetric structure not only bilaterally but also vertically as described above, then the bilaterally and vertical symmetric weight peripheral structure is obtained, and accordingly, the further stabilized structure in stress state is obtained, which enables to further reduce the temperature characteristics.

Moreover, in the acceleration sensor according to this embodiment, the pillar-like fixed electrodes 34e and 34f may be pulled out through the respective through portions 36c and 36d formed on both sides in the second direction (for example, both upper and lower sides). If the pillar structure is made to have a bilaterally and vertically symmetric structure in such a bilaterally and vertically symmetric weight peripheral structure as described above, then the structure becomes further stabilized in the stress state, which enables to further reduce the temperature characteristics.

Moreover, in the acceleration sensor according to this embodiment, the X detection portion 10, the Y detection portion 20 and the Z detection portion 30 may be arranged in line with the Z detection portion 30 located at the center, and such a linear arrangement direction may be the first direction (for example, the right and left direction). In such a way, the through portions 36a and 36b and the like can be formed in the region between the X detection portion 10 and the Z detection portion 30 and in the region between the Z detection portion 30 and the Y detection portion 20, and accordingly, it becomes possible to achieve miniaturization of the acceleration sensor.

The description of the preferred embodiments of the present invention has been made above; however, the present invention is not limited to the above-described embodiments, and is modifiable in various ways. For example, FIG. 11 shows a state where the joint regions 35a and 35b and the symmetric regions 35c and 35d are not coupled to the upper fixing plate 2a; however, it does not matter whether these regions are coupled. Moreover, in FIG. 12(f), the pillar-like fixed electrodes 34e and 34f are pulled out through the respective through portions 36c and 36d; however, only either one of the pillar-like fixed electrodes 34e and 34f may be pulled out through only either one of the through portions 36c and 36d. As a matter of course, the shapes, sizes and the like of the through portions 36a, 36b, 36c and 36d and the pillar-like fixed electrodes 34c, 34d, 34e and 34f are changeable as appropriate.

The entire contents of Japanese Patent Application No. 2012-226509 (filed on: October 12, 2012) and Japanese Patent Application No. 2013-119688 (filed on: June 6, 2013) are incorporated herein by reference.

### [Industrial Applicability]

The acceleration sensor according to the present invention is applicable to the acceleration sensor which needs to enhance the detection sensitivity for the accelerations in the three directions perpendicular to one another.

### [Description of Reference Signs]

- 2a: UPPER FIXING PLATE (FIRST FIXING PLATE)
- 2b: LOWER FIXING PLATE (SECOND FIXING PLATE)
- 3: FRAME PORTION
- 10: X DETECTION PORTION
- 11: FIRST MOVABLE ELECTRODE
- 12a, 12b: PAIR OF BEAM PORTIONS
- 13a, 13b: FIRST FIXED ELECTRODE
- 20: Y DETECTION PORTION
- 21: SECOND MOVABLE ELECTRODE
- 22a, 22b: PAIR OF BEAM PORTIONS
- 23a, 23b: SECOND FIXED ELECTRODE
- 30: Z DETECTION PORTION
- 31: THIRD MOVABLE ELECTRODE
- 32a, 32b, 32c, 32d: PAIR OR MORE OF BEAM PORTIONS
- 33a, 33b: THIRD FIXED ELECTRODE
- 34c, 34d, 34e, 34f: PILLAR-LIKE FIXED ELECTRODE
- 35a, 35b: JOINT REGION
- 35c, 35d: SYMMETRIC REGION
- 36a, 36b, 36c, 36d: THROUGH PORTIONS

## Claims

1. An acceleration sensor comprising:
an X detection portion (10) that detects acceleration in an X direction as one direction in planer directions by swinging a first movable electrode (11) about a pair of beam portions (12a, 12b);
a Y detection portion (20) that detects acceleration in a Y direction perpendicular to the X direction, the Y direction being one direction in the planer directions, by swinging a second movable electrode (21) about a pair of beam portions (22a, 22b); and
a Z detection portion (30) that detects acceleration in a Z direction as a vertical direction by moving a third movable electrode (31) in parallel in the vertical direction, the third movable electrode (31) being held by a pair or more of beam portions (32a, 32b, 32c, 32d),
wherein the X detection portion (10), the Y detection portion (20) and the Z detection portion (30) are arranged in one chip,
wherein the X detection portion (10) arranges first fixed electrodes (13a, 13b) so that the first fixed electrodes (13a, 13b) can be opposed to one side and the other side of a front surface of the first movable electrode (11) with a straight line that connects the pair of beam portions to each other as a borderline, and detects the acceleration in the X direction based on changes of electrostatic capacitances between the first movable electrode (11) and the first fixed electrodes (13a, 13b),
the Y detection portion (20) arranges second fixed electrodes (23a, 23b) so that the second fixed electrodes (23a, 23b) can be opposed to one side and the other side of a front surface of the second movable electrode (21) with a straight line that connects the pair of beam portions (22a, 22b) to each other as a borderline, and detects the acceleration in the Y direction based on changes of electrostatic capacitances between the second movable electrode (21) and the second fixed electrodes (23a, 23b),
wherein the acceleration sensor is **characterized in that**
the Z detection portion (30) arranges third fixed electrodes (33a, 33b) so that the third fixed electrodes (33a, 33b) can be opposed to a front surface and a back surface of the third movable electrode (31), and detects the acceleration in the Z direction based on changes of electrostatic capacitances between the third movable electrode (31) and the third fixed electrodes (33a, 33b),
wherein the X-detection portion (10), the Y-detection portion (20) and the Z detection portion (30) are arranged in line.
wherein the Z detection portion (30) is arranged in the center, and the X detection portion (10) and the Y detection portion (20) are arranged on both sides of the Z detection portion (30),
wherein, in a state where a frame portion (3), that incorporates the X detection portion (10), the Y detection portion (20) and the Z detection portion (30) therein, is sandwiched by a first fixing plate (2a) and a second fixing plate (2b), joint regions (35a, 35b) of the beam portions (32a, 32b, 32c, 32d) of the Z detection portion (30) in the frame portion (3) between the Z detection portion (30) and the X detection portion (10) and between the Z detection portion (30) and the Y detection portion (20) are separated from the first fixing plate (2a),
wherein, in the frame portion (3) between the Z detection portion (30) and the X detection portion (10) and between the Z detection portion (30) and the Y detection portion (20), symmetric regions (35c, 35d) which are symmetric to the joint regions (35a, 35b) with respect to the Z detection portion (30) taken as a reference are separated from the first fixing plate (2a).

2. The acceleration sensor according to either one of claims 1, wherein the third fixed electrode (33a, 33b) arranged on the back surface of the third movable electrode (31) is pulled out to one side of the third movable electrode (31) through a pillar-like fixed electrode (34c) separated from the third movable electrode (31).

## Patentansprüche

1. Beschleunigungsmesser mit:
einem X-Erfassungsteil (10), der eine Beschleunigung in einer X-Richtung ermittelt, die eine Richtung in Flächenrichtungen ist, indem eine erste bewegliche Elektrode (11) um ein Paar von Trägerteilen (12a, 12b) schwingt,
einem Y-Erfassungsteil (20), der eine Beschleunigung in einer Y-Richtung ermittelt, die senkrecht zur X-Richtung ist, wobei die Y-Richtung eine Richtung in den Flächenrichtungen ist, indem eine zweite bewegliche Elektrode (21) um ein Paar von Trägerteilen (22a, 22b) schwingt, und
einem Z-Erfassungsteil (30), der eine Beschleunigung in einer Z-Richtung ermittelt, die eine vertikale Richtung ist, indem sich eine dritte bewegliche Elektrode (31) parallel zu der vertikalen Richtung bewegt, wobei die dritte bewegliche Elektrode (31) durch ein Paar oder mehr Trägerteile (32a, 32b, 32c, 32d) gehalten wird,
wobei der X-Erfassungsteil (10), der Y-Erfassungsteil (20) und der Z-Erfassungsteil (30) auf einem Chip angeordnet sind,
wobei in dem X-Erfassungsteil (10) erste feststehende Elektroden (13a, 13b) so angeordnet sind, dass die ersten feststehenden Elektroden (13a, 13b) der einen Seite und der anderen Seite einer Vorderfläche der ersten beweglichen Elektrode (11) mit einer Geraden, die das Paar von Trägerteilen miteinander verbindet, als einer Grenzlinie gegenübergestellt werden können, und die Beschleunigung in der X-Richtung auf Basis von Veränderungen von elektrostatischen Kapazitäten zwischen der ersten beweglichen Elektrode (11) und den ersten feststehenden Elektroden (13a, 13b) ermittelt wird,
in dem Y-Erfassungsteil (20) zweite feststehende Elektroden (23a, 23b) so angeordnet sind, dass die zweiten feststehenden Elektroden (23a, 23b) der einen Seite und der anderen Seite einer Vorderfläche der zweiten beweglichen Elektrode (21) mit einer Geraden, die das Paar von Trägerteilen (22a, 22b) miteinander verbindet, als einer Grenzlinie gegenübergestellt werden können, und die Beschleunigung in der Y-Richtung auf Basis von Veränderungen von elektrostatischen Kapazitäten zwischen der zweiten beweglichen Elektrode (21) und den zweiten feststehenden Elektroden (23a, 23b) ermittelt wird,
wobei der Beschleunigungsmesser **dadurch gekennzeichnet ist, dass**
in dem Z-Erfassungsteil (30) dritte feststehende Elektroden (33a, 33b) so angeordnet sind, dass die dritten feststehenden Elektroden (33a, 33b) einer Vorderfläche und einer Rückfläche der dritten beweglichen Elektrode (31) gegenübergestellt werden können, und die Beschleunigung in der Z-Richtung auf Basis von Veränderungen von elektrostatischen Kapazitäten zwischen der dritten beweglichen Elektrode (31) und den dritten feststehenden Elektroden (33a, 33b) ermittelt wird,
wobei der X-Erfassungsteil (10), der Y-Erfassungsteil (20) und der Z-Erfassungsteil (30) in einer Linie angeordnet sind,
wobei der Z-Erfassungsteil (30) in der Mitte angeordnet ist und der X-Erfassungsteil (10) und der Y-Erfassungsteil (20) auf beiden Seiten des Z-Erfassungsteils (30) angeordnet sind,
wobei in einem Zustand, in dem ein Rahmenteil (3), in welchem der X-Erfassungsteil (10), der Y-Erfassungsteil (20) und der Z-Erfassungsteil (30) eingebaut sind, zwischen einer ersten Befestigungsplatte (2a) und einer zweiten Befestigungsplatte (2b) eingeklemmt ist, Verbindungsbereiche (35a, 35b) der Trägerteilen (32a, 32b, 32c, 32d) des Z-Erfassungsteils (30) in dem Rahmenteil (3) zwischen dem Z-Erfassungsteil (30) und dem X--Erfassungsteil (10) und zwischen dem Z-Erfassungsteil (30) und dem Y-Erfassungsteil (20) von der ersten Befestigungsplatte (2a) abgetrennt sind,
wobei in dem Rahmenteil (3) zwischen dem Z-Erfassungsteil (30) und dem X-Erfassungsteil (10) und zwischen dem Z-Erfassungsteil (30) und dem Y-Erfassungsteil (20) symmetrische Bereiche (35c, 35d), die bezüglich des Z-Erfassungsteils (30), der als eine Bezugsgröße genommen wird, symmetrisch zu den Verbindungsbereichen (35a, 35b) sind, von der ersten Befestigungsplatte (2a) abgetrennt sind.

2. Beschleunigungsmesser nach einem der Ansprüche 1, wobei die dritte feststehende Elektrode (33a, 33b), die auf der auf der Rückfläche der dritten beweglichen Elektrode (31) angeordnet ist, durch eine säulenförmige feststehende Elektrode (34c), die von der dritten beweglichen Elektrode (31) abgetrennt ist, zu einer Seite der dritten beweglichen Elektrode (31) herausgezogen wird.

## Revendications

1. Capteur d'accélération comprenant :
une partie de détection X (10) qui détecte une accélération dans une direction X en tant que direction parmi des directions plus planes en faisant osciller une première électrode mobile (11) autour d'une paire de parties de traverses (12a, 12b) ;
une partie de détection Y (20) qui détecte une accélération dans une direction Y perpendiculaire à la direction X, la direction Y étant une direction dans les directions plus planes, en faisant osciller une seconde électrode mobile (21) autour d'une paire de parties de traverses (22a, 22b) ; et
une partie de détection Z (30) qui détecte une accélération dans une direction Z en tant que direction verticale en déplaçant une troisième électrode mobile (31) en parallèle dans la direction verticale, la troisième électrode mobile (31) étant maintenue par une paire ou plus de parties de traverses (32a, 32b, 32c, 32d),
dans lequel la partie de détection X (10), la partie de détection Y (20) et la partie de détection Z (30) sont placées sur une puce,
dans lequel la partie de détection X (10) place des premières électrodes fixes (13a, 13b) de sorte que les premières électrodes fixes (13a, 13b) puissent être opposées à un côté et à l'autre côté d'une surface avant de la première électrode mobile (11) avec une ligne droite qui relie les deux parties de traverses l'une à l'autre comme une ligne de délimitation, et détecte l'accélération dans la direction X sur la base de changements de capacitances électrostatiques entre la première électrode mobile (11) et les premières électrodes fixes (13a, 13b),
la partie de détection Y (20) place des secondes électrodes fixes (23a, 23b) de sorte que les secondes électrodes fixes (23a, 23b) puissent être opposées à un côté et à l'autre côté d'une surface avant de la seconde électrode mobile (21) avec une ligne droite qui relie les deux parties de traverses (22a, 22b) l'une à l'autre comme une ligne de délimitation, et détecte l'accélération dans la direction Y sur la base de changements de capacitances électrostatiques entre la seconde électrode mobile (21) et les secondes électrodes fixes (23a, 23b),
dans lequel le capteur d'accélération est **caractérisé en ce que**
la partie de détection Z (30) place des troisièmes électrodes fixes (33a, 33b) de sorte que les troisièmes électrodes fixes (33a, 33b) puissent être opposées à une surface avant et une surface arrière de la troisième électrode mobile (31), et détecte l'accélération dans la direction Z sur la base de changements de capacitances électrostatiques entre la troisième électrode mobile (31) et les troisièmes électrodes fixes (33a, 33b),
dans lequel la partie de détection X (10), la partie de détection Y (20) et la partie de détection Z (30) sont placées sur une ligne,
dans lequel la partie de détection Z (30) est placée au centre, et la partie de détection X (10) et la partie de détection Y (20) sont placées des deux côtés de la partie de détection Z (30),
dans lequel, lorsqu'une partie d'armature (3), qui contient la partie de détection X (10), la partie de détection Y (20) et la partie de détection Z (30), est prise en sandwich par une première plaque de fixation (2a) et une seconde plaque de fixation (2b), les zones de jonction (35a, 35b) des parties de traverses (32a, 32b, 32c, 32d) de la partie de détection Z (30) dans la partie d'armature (3) entre la partie de détection Z (30) et la partie de détection X (10) et entre la partie de détection Z (30) et la partie de détection Y (20) sont séparées de la première plaque de fixation (2a),
dans lequel, dans la partie d'armature (3) située entre la partie de détection Z (30) et la partie de détection X (10) et entre la partie de détection Z (30) et la partie de détection Y (20), des zones symétriques (35c, 35d) qui sont symétriques aux zones de jonction (35a, 35b) par rapport à la partie de détection Z (30) prise comme une référence sont séparées de la première plaque de fixation (2a).

2. Capteur d'accélération selon la revendication 1, dans lequel la troisième électrode fixe (33a, 33b) placée sur la surface arrière de la troisième électrode mobile (31) est sortie vers un côté de la troisième électrode mobile (31) par le biais d'une électrode fixe en forme de pilier (34c) séparée de la troisième électrode mobile (31).
